# FASCICULE DE BREVET EUROPEEN

(11) **EP 3 658 350 B1**
(45) Date de publication et mention de la délivrance du brevet: **29.09.2021**
(21) Numéro de dépôt: 18759149.0
(22) Date de dépôt: 13.07.2018
(51) Int. Cl.: B29C 49/64, B29C 49/68, B29C 49/06, B29B 13/02

(54) **UNITÉ DE TRAITEMENT D'ÉBAUCHES COMPRENANT UNE ENCEINTE REGROUPANT UNE ZONE DE CHAUFFAGE ET UNE ZONE DE PILOTAGE**
EINHEIT ZUR VERARBEITUNG VON VORFORMEN MIT EINEM GEHÄUSE, DAS EINE HEIZZONE UND EINE STEUERZONE KOMBINIERT
UNIT FOR PROCESSING PREFORMS COMPRISING AN ENCLOSURE COMBINING A HEATING ZONE AND A CONTROL ZONE

(30) Priorité: 26.07.2017 FR 1757081
(43) Date de publication de la demande: 03.06.2020
(73) Titulaire: Sidel Participations, 76930 Octeville-sur-Mer (FR)
(72) Inventeur: FEUILLOLEY, Guy, 76930 Octeville-sur-mer (FR); LAHOGUE, Yoann, 76930 Octeville-sur-mer (FR); SOUFFES, Denis, 76930 Octeville-sur-mer (FR); PASQUIER, Hervé, 76930 Octeville-sur-mer (FR)
(74) Mandataire: Sidel Group
(86) Numéro de dépôt international: PCT/FR2018/051777
(87) Numéro de publication internationale: WO 2019/020895

(56) Documents cités:
- US-A1- 2010 072 673
- US-A1- 2013 056 649
- US-A1- 2014 305 919
- US-A1- 2017 136 682

## Description

La présente invention concerne la fabrication de corps creux tels que des récipients, par soufflage ou étirage-soufflage à partir d'ébauches en matière plastique.

Le terme « ébauche » désigne une préforme, obtenue par injection, extrusion-compression ou autre, d'une matière plastique dans un moule, ou un corps creux intermédiaire obtenu à partir d'une préforme ayant subi au moins une première opération de formage et destiné à en subir au moins une deuxième.

L'invention concerne plus précisément le traitement, par exemple thermique (chauffe) ou de décontamination, des ébauches. Le traitement des ébauches est généralement réalisé au défilé au sein d'une unité de traitement (couramment appelée « four » dans le cas de la chauffe), équipée d'une pluralité de sources de rayonnement électromagnétique, devant lesquelles défiles les ébauches entraînées en rotation sur elles-mêmes.

Le rayonnement électromagnétique peut être obtenu par des sources de rayonnement électromagnétique monochromatique ou pseudo-monochromatique, telles que des diodes laser, dont le spectre d'émission s'étend pour l'essentiel dans le domaine de l'infrarouge. Le rendement et les propriétés d'une telle chauffe permettent de réaliser une chauffe plus rapide et plus sélective des ébauches.

Les sources de rayonnement électromagnétique, regroupées en émetteurs, sont pilotées par des dispositifs de commande, alimentés chacun par un dispositif d'alimentation qui nécessite un refroidissement important pour éviter une surchauffe et des défauts de fonctionnement. Un tel refroidissement est par exemple obtenu grâce à des ventilateurs imposants permettant un refroidissement par convection forcée. Cet ensemble, regroupant les dispositifs de commande, les dispositifs d'alimentation et les moyens de refroidissement, est monté dans une armoire qui est disposée à côté et en dehors de la zone de chauffage comprenant les émetteurs devant lesquelles les ébauches défilent. En effet, le refroidissement ne doit pas perturber l'atmosphère de la zone de chauffage et perturber la chauffe des ébauches, ce qui serait le cas si les ventilateurs étaient disposés dans l'enceinte de la zone de chauffage.

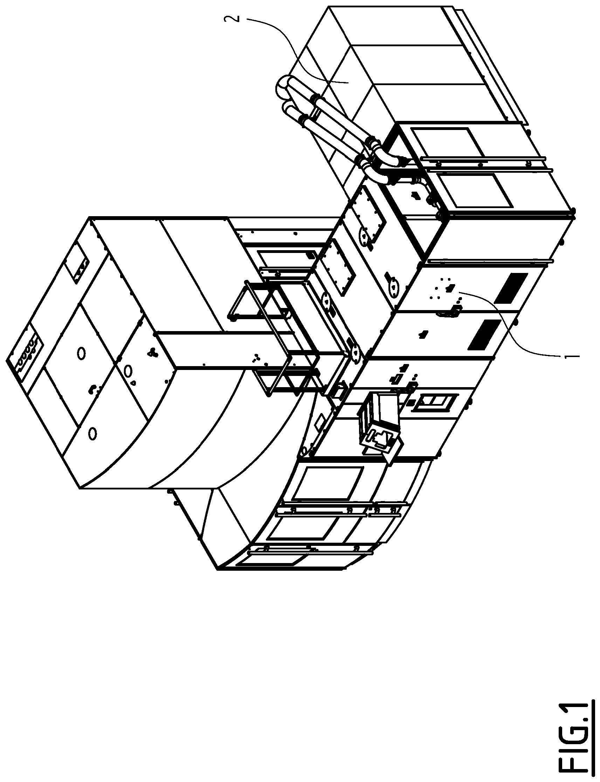

Une telle architecture d'unité de traitement a été représentée sur la figure 1, sur laquelle la zone de chauffage est désignée par la référence 1 et l'armoire est désignée par la référence 2. Comme on peut le constater sur cette figure, l'armoire 2 requiert presqu'autant d'espace que la zone de chauffage, ce qui rend l'unité de traitement très encombrante.

En outre, une telle architecture nécessite de longs câbles pour relier les dispositifs de commande aux sources de rayonnement correspondantes. Les pertes ohmiques dans les câbles sont donc augmentées, ce qui entraîne une surconsommation en énergie de l'unité de traitement pour compenser ces pertes. De plus, la longueur des câbles oblige à prévoir des boîtiers de connexion pour la connexion entre les dispositifs de commande et les émetteurs, ce qui ajoute encore de la longueur de câbles. En outre, une telle architecture ne permet pas de mesurer avec précision une éventuelle dérive en tension aux bornes des émetteurs, une telle dérive étant le signe d'un mauvais refroidissement de l'émetteur.

"Par ailleurs, le document US 2013/056649 décrit un four laser pour chauffer des ébauches pour la fabrication par étirage soufflage de récipients à partir des ébauches".

L'un des buts de l'invention est de pallier les inconvénients ci-dessus en proposant une unité de traitement à l'encombrement réduit.

A cet effet, selon premier aspect, l'invention porte sur une unité de traitement d'ébauches de corps creux en matière plastique, comprenant une enceinte comprenant une zone de chauffage dans laquelle les ébauches circulent selon un trajet longitudinal prédéfini, ladite zone de chauffage comprenant une pluralité d'émetteurs comprenant chacun une pluralité de sources de rayonnement électromagnétique monochromatique ou pseudo-monochromatique, lesdits émetteurs étant répartis dans ladite zone de chauffage selon le trajet longitudinal prédéfini, ladite enceinte comprenant en outre une zone de pilotage comprenant une pluralité de dispositifs de commande des émetteurs, reliés auxdits émetteurs et étant agencés pour commander le rayonnement émis par lesdits émetteurs, dans laquelle la zone de pilotage s'étend en regard de la zone de chauffage, les dispositifs de pilotage étant répartis dans ladite zone de pilotage selon le trajet longitudinal prédéfini.

En répartissant les dispositifs de pilotage le long du trajet longitudinal prédéfini, la zone de pilotage peut être aménagée dans la même enceinte que la zone de chauffage, ce qui réduit fortement l'encombrement de l'unité de traitement. En réduisant l'encombrement, on permet en outre l'utilisation de câbles de connexion plus courts, ce qui réduit les pertes ohmiques et donc la consommation énergétique de l'unité de traitement et permet une mesure d'une éventuelle dérive en tension aux bornes des émetteurs.

Selon d'autres caractéristiques de l'unité de traitement selon l'invention :
- la zone de pilotage comprend en outre au moins un dispositif d'alimentation agencé pour alimenter électriquement au moins un dispositif de commande.
- la zone de pilotage comprend en outre au moins un circuit de refroidissement dans lequel circule un fluide de refroidissement, le dispositif d'alimentation étant appliqué contre ledit circuit de refroidissement afin de refroidir le dispositif d'alimentation.
- le fluide de refroidissement est isolé de la zone de chauffage de sorte que les calories extraites par le fluide de refroidissement ne réchauffent pas l'atmosphère de la zone de chauffage.

L'architecture de l'unité de traitement permet un refroidissement efficace des dispositifs d'alimentation en mettant en contact ces dispositifs directement avec le circuit de refroidissement. Ainsi, le refroidissement ne se fait pas par convection forcée au moyen de ventilateurs encombrants, mais par conduction, ce qui permet de ne pas perturber l'atmosphère dans la zone de chauffage.

Selon une autre caractéristique de l'unité de traitement, le fluide de refroidissement est un liquide caloporteur. Selon cette caractéristique, il n'y a pas de circulation d'air dans la zone de pilotage et donc pas de risque que l'air s'échappe dans l'atmosphère de la zone de chauffage et perturbe celle-ci. En outre, un tel liquide peut également être utilisé pour refroidir les émetteurs de la zone de chauffage. Ainsi une seule source de liquide caloporteur peut permettre le refroidissement de la zone de pilotage et de la zone de chauffage.

Selon une autre caractéristique de l'unité de traitement selon l'invention, le dispositif d'alimentation est relié à au moins deux dispositifs de commande de sorte à alimenter électriquement lesdits dispositifs de commande.

En utilisant un dispositif d'alimentation pour alimenter plusieurs dispositifs de commande, il est possible de regrouper les dispositifs d'alimentation en une zone particulière, ce qui facilite le refroidissement.

Ainsi, on peut prévoir que les deux dispositifs de commande et le dispositif d'alimentation sont montés dans un coffret, ledit coffret étant appliqué contre le circuit de refroidissement.

Selon une autre caractéristique de l'unité de traitement selon l'invention, le dispositif d'alimentation est formé par un circuit de redressement triphasé à correction du facteur de puissance à trois niveaux.

Un tel dispositif d'alimentation permet d'alimenter plusieurs dispositifs de commande tout en conservant un facteur de puissance supérieur à 0.9 et une distorsion totale harmonique inférieure à 10%. En outre, le dispositif d'alimentation présente également un encombrement réduit car il ne comprend qu'un nombre limité de bobines (self en anglais), qui sont les composants électroniques les plus encombrants.

Selon d'autres caractéristiques de l'unité de traitement selon l'invention :
- chaque dispositif de commande est relié à deux émetteurs, lesdits émetteurs étant connectés entre eux en série, de sorte que chaque dispositif de commande commande le rayonnement émis par deux émetteurs ;
- les sources de rayonnement sont des diodes laser.

Selon un autre aspect, l'invention porte sur une unité de traitement d'ébauches de corps creux en matière plastique, comprenant une enceinte comprenant une zone de chauffage dans laquelle les ébauches circulent selon un trajet longitudinal prédéfini, ladite zone de chauffage comprenant une pluralité d'émetteurs comprenant chacun une pluralité de sources de rayonnement électromagnétique monochromatique ou pseudo-monochromatique, dans laquelle lesdits émetteurs sont répartis dans ladite zone de chauffage selon le trajet longitudinal prédéfini, et présentant chacun une face d'émission du rayonnement et une face arrière opposée à la face d'émission, l'unité de traitement présentant un plan arrière vertical, parallèle au trajet longitudinal, et passant sensiblement par une partie ou par la totalité des faces arrières, dans laquelle ladite enceinte comprend en outre une zone de pilotage comprenant une pluralité de dispositifs de commande des émetteurs, reliés auxdits émetteurs et étant agencés pour commander le rayonnement émis par lesdits émetteurs, caractérisée en ce que la zone de pilotage s'étend en regard de la zone de chauffage et au voisinage immédiat de la zone de chauffage, les dispositifs de commande étant répartis dans ladite zone de pilotage selon le trajet longitudinal prédéfini et en ce que la zone de pilotage s'étend horizontalement au moins en partie d'un côté dudit plan arrière, opposé au trajet de circulation des ébauches.

Selon un autre mode de réalisation, les émetteurs s'étendent longitudinalement d'un seul côté du trajet longitudinal prédéfini. Cela permet que l'encombrement de l'unité de traitement soit plus compact.

Selon un autre mode de réalisation, les émetteurs s'étendent longitudinalement de part et d'autre du trajet longitudinal prédéfini.

Selon encore un mode de réalisation la zone de pilotage ne s'étend pas horizontalement sous la zone de chauffage. Cela permet que la zone de chauffage de l'unité de traitement ne soit pas perturbée par les déperditions thermiques occasionnées par la zone de pilotage. Cela permet aussi d'avoir une zone de chauffage sans inertie thermique et de maintenir la zone de chauffage froide quand les émetteurs sont à l'arrêt.

Selon encore un autre mode de réalisation, la zone de pilotage est à une hauteur inférieure de celle des émetteurs. Cela permet que l'accessibilité des émetteurs et de la zone de pilotage soient renforcées. Cela permet aussi de réaliser une maintenance sur les émetteurs ou dans la zone de pilotage indépendamment l'un de l'autre.

Selon d'autres caractéristiques de l'unité de traitement :
- la zone de pilotage comprend en outre au moins un dispositif d'alimentation agencé pour alimenter électriquement au moins un dispositif de commande.
- la zone de pilotage comprend en outre au moins un circuit de refroidissement dans lequel circule un fluide de refroidissement, le dispositif d'alimentation étant appliqué contre ledit circuit de refroidissement afin de refroidir le dispositif d'alimentation.
- le fluide de refroidissement est isolé de la zone de chauffage de sorte que les calories extraites par le fluide de refroidissement ne réchauffent pas l'atmosphère de la zone de chauffage.

L'architecture de l'unité de traitement permet un refroidissement efficace des dispositifs d'alimentation en mettant en contact ces dispositifs directement avec le circuit de refroidissement. Ainsi, le refroidissement ne se fait pas par convection forcée au moyen de ventilateurs encombrants, mais par conduction, ce qui permet de ne pas perturber l'atmosphère dans la zone de chauffage.

Selon une autre caractéristique de l'unité de traitement, le fluide de refroidissement est un liquide caloporteur. Selon cette caractéristique, il n'y a pas de circulation d'air dans la zone de pilotage et donc pas de risque que l'air s'échappe dans l'atmosphère de la zone de chauffage et perturbe celle-ci. En outre, un tel liquide peut également être utilisé pour refroidir les émetteurs de la zone de chauffage. Ainsi une seule source de liquide caloporteur peut permettre le refroidissement de la zone de pilotage et de la zone de chauffage.

Selon une autre caractéristique de l'unité de traitement selon l'invention, le dispositif d'alimentation est relié à au moins deux dispositifs de commande de sorte à alimenter électriquement lesdits dispositifs de commande.

En utilisant un dispositif d'alimentation pour alimenter plusieurs dispositifs de commande, il est possible de regrouper les dispositifs d'alimentation en une zone particulière, ce qui facilite le refroidissement.

Ainsi, on peut prévoir que les deux dispositifs de commande et le dispositif d'alimentation sont montés dans un coffret, ledit coffret étant appliqué contre le circuit de refroidissement.

Selon une autre caractéristique de l'unité de traitement selon l'invention, le dispositif d'alimentation est formé par un circuit de redressement triphasé à correction du facteur de puissance à trois niveaux.

Un tel dispositif d'alimentation permet d'alimenter plusieurs dispositifs de commande tout en conservant un facteur de puissance supérieur à 0.9 et une distorsion totale harmonique inférieure à 10%. En outre, le dispositif d'alimentation présente également un encombrement réduit car il ne comprend qu'un nombre limité de bobines (self en anglais), qui sont les composants électroniques les plus encombrants.

Selon d'autres caractéristiques de l'unité de traitement selon l'invention :
- chaque dispositif de commande est relié à deux émetteurs, lesdits émetteurs étant connectés entre eux en série, de sorte que chaque dispositif de commande commande le rayonnement émis par deux émetteurs ;
- les sources de rayonnement sont des diodes laser.

L'invention concerne également une installation de traitement d'ébauches de corps creux en matière plastique, comprenant au moins une première unité de traitement telle que , et au moins une deuxième unité de traitement agencée pour appliquer un autre traitement aux ébauches, ladite installation de traitement comprenant au moins un dispositif de communication de signaux entre la première unité de traitement et la deuxième unité de traitement, ledit dispositif de communication étant commun à au moins deux dispositifs de commande des émetteurs de la première unité de traitement.

La communication entre la première unité de traitement et les autres unités de traitement de l'installation est simplifiée en ne passant que par un seul dispositif de communication, ce qui permet de réduire encore l'encombrement de la zone de pilotage de la première unité de traitement.

D'autres aspects et avantages de l'invention apparaîtront à la lecture de la description qui suit, donnée à titre d'exemple et faite en référence aux dessins annexés, dans lesquels :
- la Fig. 1 est une représentation schématique en perspective d'une installation de traitement selon l'art antérieur,
- la Fig. 2 est une représentation schématique en perspective d'une installation de traitement selon l'invention,
- la Fig. 3 est une représentation schématique en perspective de l'unité de traitement selon l'invention,
- la Fig. 4 est une représentation schématique en perspective du dispositif de refroidissement de la zone de pilotage de l'unité de traitement de la Fig .3,
- la Fig. 5 est une représentation schématique sous forme d'organigramme de l'architecture de la zone de pilotage, et
- la Fig. 6 est un schéma électronique d'une partie du circuit formant le dispositif d'alimentation de la zone de pilotage.

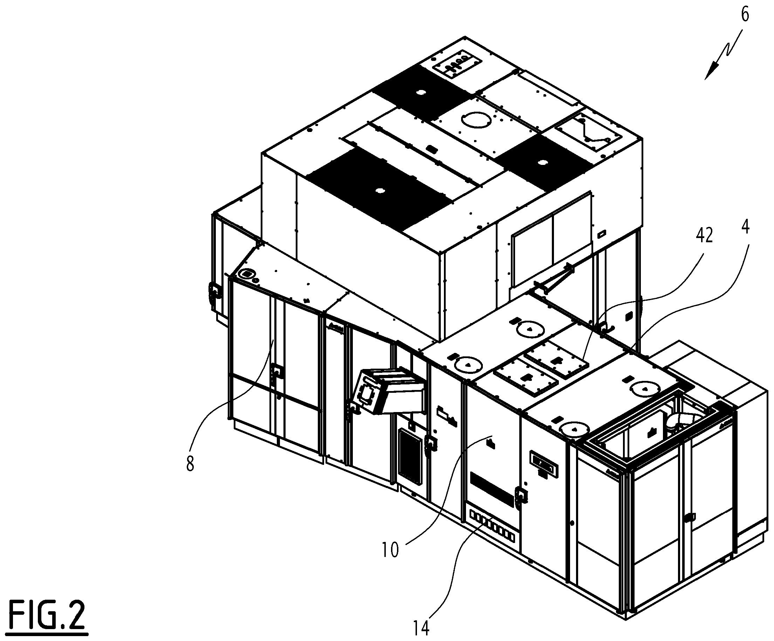

En référence à la Fig. 2, on décrit une unité de traitement **4** d'ébauches en matière plastique agencée pour exposer les ébauches à un rayonnement électromagnétique monochromatique ou pseudo-monochromatique, par exemple afin de chauffer ces ébauches à une température à laquelle les ébauches sont malléables et peuvent être former en récipients. Ainsi, l'unité de traitement 4 est par exemple un four faisant partie d'une installation de traitement d'ébauches **6** comprenant une unité de formage **8** des ébauches chauffées dans l'unité de traitement 4 afin de former des récipients. Une telle installation de traitement et son unité de formage, par exemple une unité de soufflage, sont connues et ne seront pas décrite plus en détail ici.

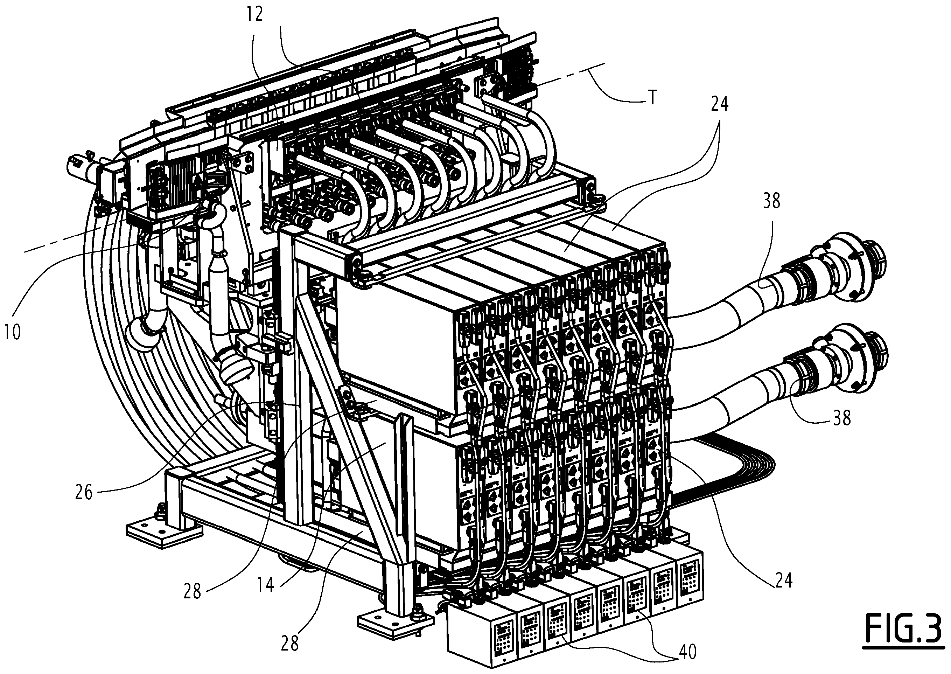

L'unité de traitement 4 comprend une zone de chauffage **10,** dans laquelle les ébauches circulent selon un trajet longitudinal prédéfini T afin d'être exposées au rayonnement électromagnétique monochromatique ou pseudo-monochromatique, comme représenté sur la Fig. 3. A cet effet, la zone de chauffage 10 comprend une pluralité d'émetteurs **12** comprenant chacun une pluralité de sources de rayonnement électromagnétique monochromatique ou pseudo-monochromatique, telles que des diodes laser. Les émetteurs 12 s'étendent le long du trajet longitudinal prédéfini T selon lequel les ébauches circulent. Ainsi, les émetteurs 12 sont par exemple répartis le long du trajet T de part et d'autre de ce trajet T de sorte que les ébauches circulent entre deux parois d'émetteurs 12 le long du trajet T. De façon connue, les ébauches peuvent être entraînées en rotation sur elles-mêmes pendant qu'elles circulent entre les parois d'émetteurs 12. Un tel agencement de zone de chauffage 10 est connu et ne sera pas décrit plus en détail ici. L'homme du métier pourra par exemple se référer aux documents WO-2013/076415 et WO-2015/140424 pour une description détaillée d'exemples d'agencements de zones de chauffage.

L'unité de traitement 4 comprend une zone de pilotage **14** regroupant les éléments nécessaires pour piloter les émetteurs 12. Par pilotage des émetteurs 12, on entend le réglage du rayonnement électromagnétique émis par les sources de rayonnement électromagnétique monochromatique ou pseudo-monochromatique formant les émetteurs 12 afin de permettre d'appliquer des profils de températures particuliers aux ébauches.

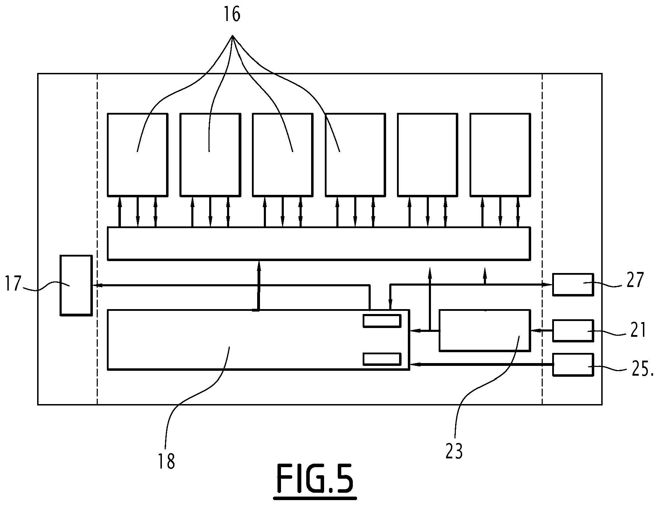

La zone de pilotage 14 comprend une pluralité de dispositifs de commande 16 (Fig. 5), ou drivers en anglais, connectés électriquement aux émetteurs 12. A titre d'exemple, un dispositif de commande 16 peut être agencé pour piloter deux émetteurs 12 connectés en série. Il est cependant entendu qu'un dispositif de commande 16 pourrait être agencé pour piloter un seul émetteur ou plus de deux émetteurs. Les dispositifs de commande 16 sont également répartis le long du trajet longitudinal prédéfini T de sorte que la zone de pilotage 14 s'étend le long du trajet longitudinal prédéfini T en regard de la zone de chauffage 10, c'est-à-dire au voisinage immédiat de la zone de chauffage. Cela permet un raccordement électrique simplifié et une unité de traitement 4 plus compact. Par exemple une partie ou la totalité des émetteurs 12 peut être intercalée horizontalement entre la zone de pilotage 14 et le trajet longitudinal des ébauches, autrement dit, la zone de pilotage peut s'étendre horizontalement selon une direction à l'arrière d'émetteurs par rapport audit trajet. En particulier, la zone de pilotage 14 peut en outre s'étendre verticalement en dessous de la zone de chauffage c'est-à-dire sous celle-ci selon la hauteur de l'unité de traitement 4, ce qui réduit fortement l'encombrement de l'unité de traitement 4, comme on peut le constater en comparant les Figs. 1 et 3.

Chaque dispositif de commande 16 est alimenté en électricité par un dispositif d'alimentation **18.** Avantageusement, un dispositif d'alimentation 18 alimente au moins deux dispositifs de commande 16. Selon le mode de réalisation représenté sur la Fig. 5, le dispositif d'alimentation 18 alimente six dispositifs de commande 16. Le fait de rendre commun le dispositif d'alimentation 18 à plusieurs dispositifs de commande 16 permet de regrouper en un seul endroit les composants qui vont s'échauffer au cours du fonctionnement de l'unité de traitement 4 et ainsi d'en faciliter le refroidissement, comme cela sera décrit ultérieurement.

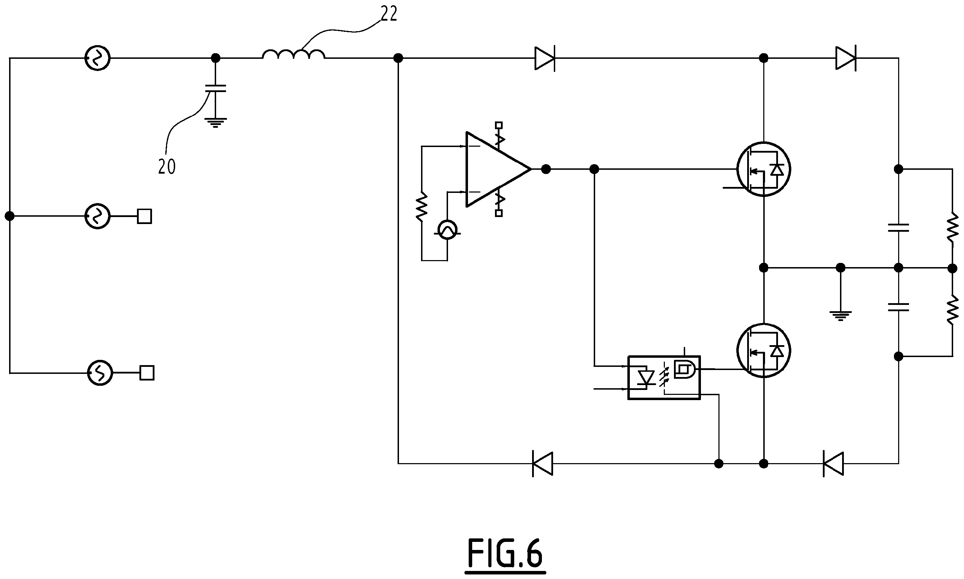

Le dispositif d'alimentation 18 est formé par un circuit de redressement triphasé à correction du facteur de puissance à trois niveaux, dont un des niveaux est représenté sur la Fig. 6. Un tel circuit a été décrit en détail dans la publication « Three-Phase PFC and AC-AC Converter Systems » (PFC Triphasés et Systèmes de convertion AC-AC) de J.W Kolar, M. Hartmann and T. Friedli du Swiss Federal Instiute of Technology (ETH), du séminaire ACDC-ACAC APEC 2011, pages 67 à 101.

Un tel circuit permet d'alimenter les dispositifs de commande 16 en courant continu sans que la tension à l'intérieur du circuit dépasse les 400 V. Le fonctionnement en triphasé se fait sans mise à la terre, ce qui permet d'utiliser l'unité de traitement 4 dans des pays où le régime de neutre ne met pas à disposition un fil de neutre auquel le circuit pourrait se connecter. Un tel régime sans neutre est appelé IT, pour « isolé par rapport à la terre ». Un neutre artificiel est créé grâce à un condensateur 20. Chaque niveau ne comprend qu'une seule bobine **22,** comme représenté sur la Fig. 6, ce qui rend le circuit peu encombrant et moins coûteux en limitant le nombre de composants. Les composants du circuit peuvent être fixés sur une semelle commune, ce qui permet un refroidissement efficace, comme cela sera décrit ultérieurement.

En termes de performances, le circuit permet d'avoir un facteur de puissance supérieur à 0.9, par exemple supérieur à 0.95, ce qui ne pénalise pas la production et le transport de l'électricité. Le rendement du circuit est donc élevé. En outre, le circuit présente une distorsion totale harmonique inférieure à 10%, c'est-à-dire que le circuit génère peu d'harmoniques.

Un ensemble de dispositifs de commande 16 et leur dispositif d'alimentation 18 associé, ainsi que toute la connectique nécessaire à cet ensemble (représentée sur la Fig. 5) peuvent être disposés dans un coffret **24,** monté sur un bâti **26** sur lequel au moins un circuit de refroidissement **28** est également monté, comme représenté sur la Fig. 3. Selon le mode de réalisation représenté sur les figures, un coffret 24 permet de piloter douze émetteurs 12, chaque dispositif de commande 16 pilotant deux émetteurs et un dispositif d'alimentation 18 alimentant six dispositifs de commande 16.

Dans chaque coffret 24, une architecture telle que représentée sur la Fig. 5 peut être intégrée. Comme indiqué précédemment, un coffret contient ainsi les dispositifs de commande 16, par exemple six dispositifs de commande 16, et leur dispositif d'alimentation 18. En outre, un ensemble de diodes électroluminescentes **17** permet de renseigner un opérateur sur l'état de fonctionnement du coffret 24. L'architecture comprend également un fond de panier **19,** permettant de communaliser les connexions électriques pour connecter les dispositifs de commande 16 au dispositif d'alimentation 18 et pour distribuer les signaux de puissance, émis par le dispositif d'alimentation 18, et les signaux de commande, émis par les dispositifs de commande 16. Le coffret 24 comprend une prise d'alimentation **21** en courant continu à connecter au réseau d'électricité, la prise étant reliée à un convertisseur DC-DC **23** permettant d'adapter la tension continue du réseau en tension compatible avec les composants électroniques du circuit formant le dispositif d'alimentation 18 et du fond de panier 19. L'architecture comprend en outre une prise d'alimentation 25 en puissance triphasée sans neutre pour alimenter le dispositif d'alimentation 18. L'architecture comprend également un connecteur **27** permettant de relier les microprocesseurs des dispositifs de commande 16 et du dispositif d'alimentation 18 à un boîtier de communication, qui sera décrit ultérieurement.

Comme représenté sur la Fig. 3, plusieurs coffrets 24 sont montés les uns à côtés des autres selon la direction du trajet prédéfini T et plusieurs étages de coffrets 24 peuvent être prévus de sorte à permettre le pilotage de tous les émetteurs 12 prévus dans la zone de chauffage 10. Selon le mode de réalisation représenté sur la Fig. 3, deux étages de coffrets 24 sont prévus disposés l'un au-dessus de l'autre, chaque étage s'étendant selon la direction du trajet prédéfini T.

Chaque coffret 24 est monté contre le circuit de refroidissement 28, de sorte que le dispositif d'alimentation 18 prévu dans le coffret est appliqué contre le circuit de refroidissement 28. Un tel montage est facilité du fait que les composants qui vont s'échauffer au cours du fonctionnement de l'unité de traitement 4 sont regroupés en un seul endroit, comme cela a été décrit précédemment et que les composants du dispositif d'alimentation 18 sont montés sur une semelle, qui forme par exemple le fond du coffret, la semelle étant appliquée contre le circuit de refroidissement 28.

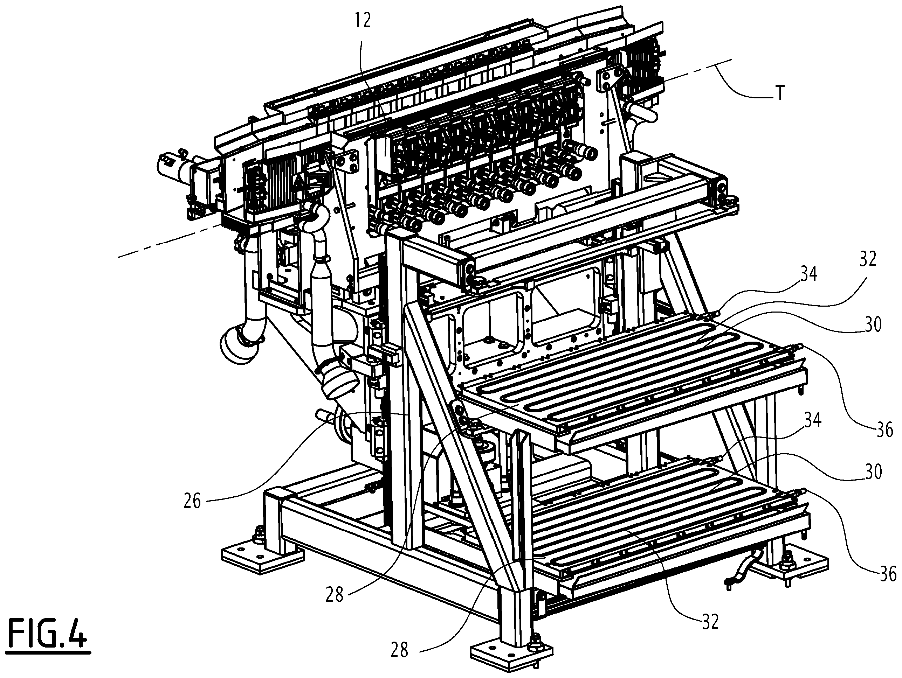

Le circuit de refroidissement 28 est plus particulièrement représenté sur la Fig. 4. Le circuit de refroidissement 28 est par exemple formé par une plaque métallique 30 dans laquelle un canal **32** de circulation d'un fluide caloporteur est prévu. La plaque métallique 30 est par exemple prévue pour s'étendre sous tous les coffrets 24 d'un étage, comme représenté sur les Figs. 3 et 4, et le canal 32 est fermé de façon étanche par les semelles formant le fond des coffrets 24 montés sur la plaque métallique 30. Ainsi, les semelles sont directement en contact avec le fluide caloporteur circulant dans le canal 32, ce qui permet un refroidissement efficace des dispositifs d'alimentation 18.

Le canal 32 est relié par une entrée **34** et une sortie **36** à un circuit d'alimentation **38** en fluide caloporteur, lui-même relié à une source de fluide caloporteur (non représentée). Le fluide caloporteur est par exemple un liquide caloporteur, tel que de l'eau. L'utilisation d'un liquide caloporteur permet d'éviter toute circulation d'un gaz dans la zone de pilotage 14 et ainsi tout risque que ce gaz vienne perturber l'atmosphère de la zone de chauffage 10, notamment en ne réchauffant pas l'atmosphère de la zone de chauffage 10 du fait des calories extraites par le fluide caloporteur. Ainsi, l'utilisation d'un liquide caloporteur permet de ne pas avoir à isoler hermétiquement la zone de chauffage 10 de la zone de pilotage 14, comme c'est le cas si un gaz caloporteur est utilisé. En outre, il convient de noter que les émetteurs 12 sont généralement également refroidis par un liquide caloporteur. Ainsi, le même circuit d'alimentation 38 en fluide caloporteur peut être utilisé pour alimenter le dispositif de refroidissement 28 de la zone de pilotage 14 et le dispositif de refroidissement des émetteurs. L'utilisation d'un liquide caloporteur dans le dispositif de refroidissement 28 permet donc de simplifier l'unité de traitement 4 tout en offrant un refroidissement efficace des dispositifs d'alimentation 18.

Selon le mode de réalisation représenté sur les Figs. 3 et 4, le dispositif de refroidissement 28 comprend une plaque métallique 30 par étage de coffrets 24.

Selon un mode de réalisation alternatif, le canal 32 pourrait est réalisé directement dans la semelle d'un coffret 24, de sorte que le dispositif de refroidissement 28 est intégré aux coffrets 24.

La communication entre la zone de pilotage 14 et le reste de l'installation de traitement 6 est assurée par un dispositif de communication de signaux **40** reliant les dispositifs de commande 16 aux dispositifs de commande des autres unités de traitement de l'installation, telles que l'unité de formage 8. Un tel dispositif de communication 40 est par exemple formé par un boîtier de communication relié aux coffrets 24, comme représenté sur la Fig. 3. Plus particulièrement, le boîtier de communication est connecté au connecteur 27 du coffret 24, décrit précédemment. Un tel dispositif de communication 40 permet de communaliser la communication entre plusieurs dispositifs de commande 16 et les dispositifs de commande des autres unités de traitement de l'installation. A titre d'exemple, un boîtier de commande est connecté à trois coffrets 24 pour communaliser la communication des dispositifs de commande 16 de ces coffrets 24. Une telle architecture permet de réduire encore l'encombrement de la zone de pilotage 14.

La zone de pilotage 14 décrite ci-dessus peut donc être prévue au voisinage de la zone de chauffage 10, par exemple dans une même enceinte **42,** comme représenté sur la Fig. 2. Ainsi, comme représenté sur la Fig. 3, le même bâti 26 peut servir de support pour les éléments de la zone de pilotage 14 et pour ceux de la zone de chauffage 10. La structure de l'unité de traitement 4 est donc simplifiée.

L'unité de traitement 4 d'ébauches de corps creux en matière plastique, comprenant une enceinte 42 comprenant une zone de chauffage 10 dans laquelle les ébauches circulent selon un trajet longitudinal prédéfini T, ladite zone de chauffage 10 comprenant une pluralité d'émetteurs 12 comprenant chacun une pluralité de sources de rayonnement électromagnétique monochromatique ou pseudo-monochromatique, dans laquelle lesdits émetteurs 12 sont répartis dans ladite zone de chauffage 10 selon le trajet longitudinal prédéfini T, et présentant chacun une face d'émission du rayonnement et une face arrière opposée à la face d'émission, l'unité de traitement 4 présentant un plan arrière vertical, parallèle au trajet longitudinal, et passant sensiblement par une partie ou par la totalité des faces arrières, dans laquelle ladite enceinte 42 comprend en outre une zone de pilotage 14 comprenant une pluralité de dispositifs de commande 16 des émetteurs 12, reliés auxdits émetteurs 12 et étant agencés pour commander le rayonnement émis par lesdits émetteurs 12. La zone de pilotage 14 s'étend en regard de la zone de chauffage 10 et au voisinage immédiat de la zone de chauffage 10, les dispositifs de commande 16 sont répartis dans ladite zone de pilotage 14 selon le trajet longitudinal prédéfini T et la zone de pilotage s'étend horizontalement au moins en partie d'un côté dudit plan arrière, opposé au trajet de circulation des ébauches.

Avantageusement, les émetteurs 12 s'étendent longitudinalement d'un seul côté du trajet longitudinal prédéfini T.

En variante, les émetteurs 12 s'étendent longitudinalement de part et d'autre du trajet longitudinal prédéfini T.

Avantageusement, la zone de pilotage 14 ne s'étend pas horizontalement sous la zone de chauffage 10.

Avantageusement, la zone de pilotage 14 est à une hauteur inférieure de celle des émetteurs 12.

La longueur des câbles reliant les dispositifs de commande et les émetteurs 12 peut donc être fortement réduite, de sorte que des câbles de 1 à 2 mètres peuvent être utilisés. Ainsi, les pertes ohmiques dans ces câbles sont fortement diminuées. En outre, la longueur de ces câbles permet de mesurer la dérive en tension aux bornes de chaque émetteur 12. Une telle mesure est possible car la mise en série de deux émetteurs entre eux se fait dans la zone de pilotage au lieu d'être déportée dans une boîte de connexion déportée, comme c'était le cas avec une zone de pilotage éloignée de la zone de chauffage. La mesure de la dérive en tension aux bornes de chaque émetteur 12 permet de contrôler une variation de tension anormale aux bornes d'un émetteur 12. Par exemple une baisse de tension est le signe d'un mauvais refroidissement de l'émetteur 12. Ainsi, l'unité de traitement 4 selon l'invention permet d'améliorer le fonctionnement de l'unité de traitement en facilitant la détection des éventuels disfonctionnements.

Ainsi, l'unité de traitement 4 décrite ci-dessus présente un encombrement réduit, permet de réduire la consommation énergétique et présente une structure simplifiée.

## Revendications

1. Unité de traitement (4) d'ébauches de corps creux en matière plastique, pour la fabrication desdits corps creux par soufflage ou étirage-soufflage à partir desdites ébauches, l'unité de traitement comprenant une enceinte (42) comprenant une zone de chauffage (10) dans laquelle les ébauches circulent selon un trajet longitudinal prédéfini (T), ladite zone de chauffage (10) comprenant une pluralité d'émetteurs (12) comprenant chacun une pluralité de sources de rayonnement électromagnétique monochromatique ou pseudo-monochromatique, dans laquelle lesdits émetteurs (12) sont répartis dans ladite zone de chauffage (10) selon le trajet longitudinal prédéfini (T), et présentant chacun une face d'émission du rayonnement et une face arrière opposée à la face d'émission, l'unité de traitement (4) présentant un plan arrière vertical, parallèle au trajet longitudinal, et passant sensiblement par une partie ou par la totalité des faces arrières, dans laquelle ladite enceinte (42) comprend en outre une zone de pilotage (14) comprenant une pluralité de dispositifs de commande (16) des émetteurs (12), reliés auxdits émetteurs (12) et étant agencés pour commander le rayonnement émis par lesdits émetteurs (12), **caractérisée en ce que** la zone de pilotage (14) s'étend en regard de la zone de chauffage (10) et au voisinage immédiat de la zone de chauffage (10), les dispositifs de commande (16) étant répartis dans ladite zone de pilotage (14) selon le trajet longitudinal prédéfini (T) et **en ce que** la zone de pilotage s'étend horizontalement au moins en partie d'un côté dudit plan arrière, opposé au trajet de circulation des ébauches.

2. Unité de traitement selon la revendication 1, dans laquelle les émetteurs (12) s'étendent longitudinalement d'un seul côté du trajet longitudinal prédéfini (T).

3. Unité de traitement selon la revendication 1 à 2, dans laquelle la zone de pilotage (14) ne s'étend pas horizontalement sous la zone de chauffage (10).

4. Unité de traitement selon la revendication 1 à 3, dans laquelle la zone de pilotage (14) est à une hauteur inférieure de celle des émetteurs (12).

5. Unité de traitement selon la revendication 1 à 4, dans laquelle la zone de pilotage (14) comprend en outre au moins un dispositif d'alimentation (18) agencé pour alimenter électriquement au moins un dispositif de commande (16).

6. Unité de traitement selon la revendication 5, dans laquelle la zone de pilotage (14) comprend en outre au moins un circuit de refroidissement (28) dans lequel circule un fluide de refroidissement, le dispositif d'alimentation (18) étant appliqué contre ledit circuit de refroidissement (28) afin de refroidir le dispositif d'alimentation (18).

7. Unité de traitement selon la revendication 6, dans laquelle le fluide de refroidissement est isolé de la zone de chauffage (10) de sorte que les calories extraites par le fluide de refroidissement ne réchauffent pas l'atmosphère de la zone de chauffage (10).

8. Unité de traitement selon la revendication 6 ou 7, dans laquelle le fluide de refroidissement est un liquide caloporteur.

9. Unité de traitement selon l'une quelconque des revendications 2 à 8, dans laquelle le dispositif d'alimentation (18) est relié à au moins deux dispositifs de commande (16) de sorte à alimenter électriquement lesdits dispositifs de commande (16).

10. Unité de traitement selon la revendication 9 lorsqu'elle dépend de l'une quelconque des revendications 3 à 5, dans laquelle les deux dispositifs de commande (16) et le dispositif d'alimentation (18) sont montés dans un coffret (24), ledit coffret (24) étant appliqué contre le circuit de refroidissement (28).

11. Unité de traitement selon l'une quelconque des revendications 2 à 10, dans laquelle le dispositif d'alimentation (18) est formé par un circuit de redressement triphasé à correction du facteur de puissance à trois niveaux.

12. Unité de traitement selon l'une quelconque des revendications 1 à 11, dans laquelle chaque dispositif de commande (16) est relié à deux émetteurs (12), lesdits émetteurs (12) étant connectés entre eux en série, de sorte que chaque dispositif de commande (16) commande le rayonnement émis par deux émetteurs (12).

13. Unité de traitement selon l'une quelconque des revendications 1 à 12, dans laquelle les sources de rayonnement sont des diodes laser.

14. Installation de traitement d'ébauches de corps creux en matière plastique, comprenant au moins une première unité de traitement (4) selon l'une quelconque des revendications 1 à 13, et au moins une deuxième unité de traitement (8) agencée pour appliquer un autre traitement aux ébauches, ladite installation de traitement comprenant au moins un dispositif de communication de signaux (40) entre la première unité de traitement (4) et la deuxième unité de traitement (8), ledit dispositif de communication (40) étant commun à au moins deux dispositifs de commande (16) des émetteurs (12) de la première unité de traitement (4).

## Patentansprüche

1. Einheit zur Verarbeitung (4) von Hohlkörperrohlingen aus Kunststoff zur Fertigung der Hohlkörper durch Blasen oder Streckblasen aus den Rohlingen, wobei die Verarbeitungseinheit eine Einhausung (42) umfasst, die einen Heizbereich (10) umfasst, in dem die Rohlinge auf einem vorgegebenen Weg in Längsrichtung (T) zirkulieren, wobei der Heizbereich (10) eine Mehrzahl von Emissionsvorrichtungen (12) umfasst, die jeweils eine Mehrzahl von Quellen monochromatischer oder pseudo-monochromatischer elektromagnetischer Strahlung umfassen, wobei die Emissionsvorrichtungen (12) auf dem vorgegebenen Weg in Längsrichtung (T) im Heizbereich (10) verteilt sind und jeweils eine Seite zur Emission der Strahlung und eine Rückseite, die der Emissionsseite gegenüberliegt, aufweisen, wobei die Verarbeitungseinheit (4) eine vertikale hintere Ebene aufweist, die parallel zum Weg in Längsrichtung und im Wesentlichen durch einen Abschnitt oder durch die Gesamtheit der Rückseiten verläuft, wobei die Einhausung (42) ferner eine Steuerungsbereich (14) umfasst, der eine Mehrzahl von Steuerungsvorrichtungen (16) der Emissionsvorrichtungen (12) umfasst, die mit den Emissionsvorrichtungen (12) verbunden sind und angeordnet sind, die Strahlung zu steuern, die von den Emissionsvorrichtungen (12) emittiert wird, **dadurch gekennzeichnet, dass** sich der Steuerungsbereich (14) gegenüber dem Heizbereich (10) und in unmittelbarer Nähe des Heizbereichs (10) erstreckt, wobei die Steuerungsvorrichtungen (16) im Steuerungsbereich (14) auf dem vorgegebenen Weg in Längsrichtung (T) verteilt sind, und dadurch, dass sich der Steuerungsbereich horizontal wenigstens teilweise auf einer Seite der hinteren Ebene gegenüber dem Zirkulationsweg der Rohlinge erstreckt.

2. Verarbeitungseinheit nach Anspruch 1, wobei sich die Emissionsvorrichtungen (12) in Längsrichtung auf einer einzelnen Seite des vorgegebenen Wegs in Längsrichtung (T) erstrecken.

3. Verarbeitungseinheit nach Anspruch 1 bis 2, wobei sich der Steuerungsbereich (14) nicht horizontal unter dem Heizbereich (10) erstreckt.

4. Verarbeitungseinheit nach Anspruch 1 bis 3, wobei sich der Steuerungsbereich (14) auf einer Höhe unter jener der Emissionsvorrichtungen (12) befindet.

5. Verarbeitungseinheit nach Anspruch 1 bis 4, wobei der Steuerungsbereich (14) ferner mindestens eine Stromversorgungsvorrichtung (18) umfasst, die angeordnet ist, mindestens eine Steuerungsvorrichtung (16) mit Strom zu versorgen.

6. Verarbeitungseinheit nach Anspruch 5, wobei der Steuerungsbereich (14) ferner mindestens einen Kühlkreislauf (28) umfasst, in dem ein Kühlfluid zirkuliert, wobei die Stromversorgungsvorrichtung (18) gegen den Kühlkreislauf (28) anliegt, um die Stromversorgungsvorrichtung (18) zu kühlen.

7. Verarbeitungseinheit nach Anspruch 6, wobei das Kühlfluid vom Heizbereich (10) isoliert ist, so dass die Kalorien, die durch das Kühlfluid entzogen werden, nicht die Atmosphäre des Heizbereichs (10) erwärmen.

8. Verarbeitungseinheit nach Anspruch 6 oder 7, wobei das Kühlfluid eine Wärmeübertragungsflüssigkeit ist.

9. Verarbeitungseinheit nach einem der Ansprüche 2 bis 8, wobei die Stromversorgungsvorrichtung (18) mit mindestens zwei Steuerungsvorrichtungen (16) verbunden ist, um die Steuerungsvorrichtungen (16) mit Strom zu versorgen.

10. Verarbeitungseinheit nach Anspruch 9, wenn abhängig von einem der Ansprüche 3 bis 5, wobei die zwei Steuerungsvorrichtungen (16) und die Stromversorgungsvorrichtung (18) in einem Kasten (24) montiert sind, wobei der Kasten (24) gegen den Kühlkreislauf (28) anliegt.

11. Verarbeitungseinheit nach einem der Ansprüche 2 bis 10, wobei die Stromversorgungsvorrichtung (18) von einer Dreiphasen-Gleichrichterschaltung mit Dreistufen-Leistungsfaktorkorrektur gebildet ist.

12. Verarbeitungseinheit nach einem der Ansprüche 1 bis 11, wobei jede Steuerungsvorrichtung (16) mit zwei Emissionsvorrichtungen (12) verbunden ist, wobei die Emissionsvorrichtungen (12) miteinander in Reihe geschaltet sind, so dass jede Steuerungsvorrichtung (16) die Strahlung steuert, die von zwei Emissionsvorrichtungen (12) emittiert wird.

13. Verarbeitungseinheit nach einem der Ansprüche 1 bis 12, wobei die Strahlungsquellen Laserdioden sind.

14. Anlage zur Verarbeitung von Hohlkörperrohlingen aus Kunststoff, umfassend mindestens eine erste Verarbeitungseinheit (4) nach einem der Ansprüche 1 bis 13 und mindestens eine zweite Verarbeitungseinheit (8), die angeordnet ist, eine andere Verarbeitung auf die Rohlinge anzuwenden, wobei die Verarbeitungsanlage mindestens eine Vorrichtung zur Kommunikation von Signalen (40) zwischen der ersten Verarbeitungseinheit (4) und der zweiten Verarbeitungseinheit (8) umfasst, wobei die Kommunikationsvorrichtung (40) mindestens zwei Steuerungsvorrichtungen (16) der Emissionsvorrichtungen (12) der ersten Verarbeitungseinheit (4) gemeinsam ist.

## Claims

1. Unit (4) for treating blanks of hollow bodies made of plastics material, for the manufacture of said hollow bodies by blow-moulding or stretch-blow-moulding from said blanks, the treatment unit comprising a chamber (42) comprising a heating zone (10) in which the blanks circulate along a predefined longitudinal path (T), said heating zone (10) comprising a plurality of emitters (12) each comprising a plurality of sources of monochromatic or pseudo-monochromatic electromagnetic radiation, wherein said emitters (12) are distributed in said heating zone (10) along the predefined longitudinal path (T), and each having a face via which radiation is emitted and a rear face opposite the emission face, the treatment unit (4) having a vertical rear plane parallel to the longitudinal path and passing substantially through some or all of the rear faces, wherein said chamber (42) also comprises a control zone (14) comprising a plurality of devices (16) for driving the emitters (12), connected to said emitters (12) and being arranged so as to control the radiation emitted by said emitters (12), **characterized in that** the control zone (14) extends alongside the heating zone (10) and in the immediate vicinity of the heating zone (10), the driving devices (16) being distributed in said control zone (14) along the predefined longitudinal path (T), and **in that** the control zone extends horizontally at least partially on one side of said rear plane, on the opposite side from the path of circulation of the blanks.

2. Treatment unit according to Claim 1, wherein the emitters (12) extend longitudinally on only one side of the predefined longitudinal path (T).

3. Treatment unit according to Claims 1 to 2, wherein the control zone (14) does not extend horizontally beneath the heating zone (10).

4. Treatment unit according to Claims 1 to 3, wherein the control zone (14) is at a height lower than that of the emitters (12).

5. Treatment unit according to Claims 1 to 4, wherein the control zone (14) also comprises at least one power supply device (18) arranged so as to supply electric power to at least one driving device (16).

6. Treatment unit according to Claim 5, wherein the control zone (14) also comprises at least one cooling circuit (28) in which a cooling fluid circulates, the power supply device (18) being applied against said cooling circuit (28) in order to cool the power supply device (18).

7. Treatment unit according to Claim 6, wherein the cooling fluid is insulated from the heating zone (10) such that the heat energy extracted by the cooling fluid does not heat the atmosphere of the heating zone (10).

8. Treatment unit according to Claim 6 or 7, wherein the cooling fluid is a heat-transfer liquid.

9. Treatment unit according to any one of Claims 2 to 8, wherein the power supply device (18) is connected to at least two driving devices (16) so as to supply electric power to said driving devices (16).

10. Treatment unit according to Claim 9 when dependent on any one of Claims 3 to 5, wherein the two driving devices (16) and the power supply device (18) are mounted in a box (24), said box (24) being applied against the cooling circuit (28).

11. Treatment unit according to any one of Claims 2 to 10, wherein the power supply device (18) is formed by a three-phase three-level power factor correction rectifier circuit.

12. Treatment unit according to any one of Claims 1 to 11, wherein each driving device (16) is connected to two emitters (12), said emitters (12) being connected to one another in series, such that each driving device (16) controls the radiation emitted by two emitters (12).

13. Treatment unit according to any one of Claims 1 to 12, wherein the sources of radiation are laser diodes.

14. Installation for treating blanks of hollow bodies made of plastics material, comprising at least one first treatment unit (4) according to any one of Claims 1 to 13, and at least one second treatment unit (8) arranged so as to apply another treatment to the blanks, said treatment installation comprising at least one device for the communication of signals (40) between the first treatment unit (4) and the second treatment unit (8), said communication device (40) being common to at least two devices (16) for driving the emitters (12) of the first treatment unit (4) .
